# EUROPÄISCHE PATENTANMELDUNG

(11) **EP 1 867 521 A2**
(43) Veröffentlichungstag der Anmeldung: **19.12.2007**
(21) Anmeldenummer: 07005709.6
(22) Anmeldetag: 20.03.2007
(51) Int. Cl.: B60P 1/64

(54) **Fahrzeug mit ausfahrbaren Stützen zum Einstellen der Höhe der Ladefläche**

(30) Priorität: 15.06.2006 DE 102006028131
(71) Anmelder: Bermüller, Wolfgang, 81927 München (DE)
(72) Erfinder: Bermüller, Wolfgang, 81927 München (DE)
(74) Vertreter: Säger, Manfred

(57) **Zusammenfassung**

Ein Fahrzeug, z.B. Sattelzug, zum Aufsatteln von Befülleinrichtungen, z.B. Container (6), auf die Ladefläche (7), mit an deren Unterseite angebrachten, ausfahrbaren Stützen (10) zum Einstellen der Höhe der Ladefläche (7), zum Stabilisieren der Lage der aufgesattelten Befülleinrichtung (6) bei deren Auf- und Abladen von dem Fahrzeug und zum Aufnehmen sowie Ableitung des Gewichtes der Befülleinrichtung in den Untergrund, kennzeichnet sich dadurch aus, dass die ausfahrbare Stütze (10) im Bereich des Reifens (15) des Fahrzeugs angeordnet ist und zwei voneinander beabstandet angeordnete, starr miteinander verbundene Abstützungen (13) aufweist, die von einer Ruhelage mit Abstand von den Reifen in eine ausgefahrene Abstützlage bis zur Anlage an der Lauffläche des Reifens am Rad des Fahrzeugs ausfahrbar sind.

## Beschreibung

Die Erfindung betrifft ein gattungsgemässes Fahrzeug gemäss dem Oberbegriff des Hauptanspruchs, nämlich ein Fahrzeug, z.B. Sattelzug, zum Aufsatteln von Befülleinrichtungen, z.B. Container, auf die Ladefläche, mit an deren Unterseite angebrachten, ausfahrbaren Stützen zum Einstellen der Höhe der Ladefläche, zum Stabilisieren der Lage der aufgesattelten Befülleinrichtung bei deren Auf- und Abladen von dem Fahrzeug und zum Aufnehmen sowie Ableitung des Gewichtes der Befülleinrichtung in den Untergrund

Solche Fahrzeuge sind bekannt und haben sich bewährt. Allerdings ist gerade bei mehrachsigen Fahrzeugen der seitliche Einbauraum für die Stützen im Bereich der Räder begrenzt, so dass dort die eigentlich notwendigen Stützen nicht, und stattdessen an anderer -ausschliesslich durch dort vorhandenen Einbauraum bestimmter- Lage eingebaut werden, was nicht nur für die Statik des Fahrzeugs von Nachteil ist.

Der Erfindung liegt daher die Aufgabe zugrunde, ein gattungsgemässes Fahrzeug der eingangs angegebenen Art vorzuschlagen, das statisch besser dimensioniert ist.

Diese Aufgabe wird bei einem gattungsgemässen Fahrzeug gemäss dem Oberbegriff des Hauptanspruchs erfindungsgemäss durch dessen kennzeichnende Merkmale, also dadurch gelöst, dass die ausfahrbare Stütze im Bereich des Rades des Fahrzeugs angeordnet ist und zwei voneinander beabstandet angeordnete, starr miteinander verbundene Abstützungen aufweist, die von einer Ruhelage mit Abstand von den Reifen in eine ausgefahrene Abstützlage bis zur Anlage an der Lauffläche des Reifens am Rad des Fahrzeugs ausfahrbar sind.

Die Stütze nimmt also in ihrer Abstützlage das Gewicht der Befülleinrichtung auf und leitet die aufgenommene Last über die Lauffläche des Reifens des Fahrzeugs in den Untergrund. Wird die Stütze noch weiter ausgefahren, so wird der diesbezügliche Teil der Ladefläche des Fahrzeugs angehoben, so dass damit die Höhe der Ladefläche eingestellt und bei dem Auf- und Abladen der Befülleinrichtung von dem Fahrzeug stabilisiert werden kann.

Erfindungsgemäss kann infolgedessen also auch der beschränkte Platz zwischen den Rädern als Einbauraum für die Stützen vorgesehen werden, so dass deren Lage in Abweichung vom Stand der Technik nicht durch den dort vorhandenen Einbauraum, sondern die statisch vorteilhaften Stellen bestimmt werden kann.

Weitere zweckmässige Ausgestaltungen und Weiterbildungen der Erfindung sind in den Unteransprüchen gekennzeichnet.

Ein Auführungsbeispiel der Erfindung wird nachfolgend unter Bezugnahme auf die Zeichnung näher erläutert. In dieser zeigt:
- Fig. 1: ein Fahrzeug mit Stütze in Ruhelage, in schematischer, abgebrochener Darstellung
- Fig. 2: das Fahrzeug mit Stütze in Abstützlage.

Das insgesamt mit 5 bezeichnetet Fahrzeug hat eine als Container 6 ausgebildete Befülleinrichtung auf seiner Ladefläche 7 aufgesattelt.

Es ist auf der Unterseite 8 eines Längsträgers 9 des Fahrzeugs 5 mit einer starr daran festgelegten, ausfahrbaren Stütze 10 versehen, die zum Einstellen der Höhe der Ladefläche 7 und zum Stabilisieren der Lage des aufgesattelten Containers 6 bei deren Auf- und Abladen von dem Fahrzeug 5 dient und zwischen zwei zueinander benachbarten Rädern 11 angeordnet sind. Die als Rollenbock ausgebildete Stütze 10 weist einen pneumatischen oder hydraulischen Zylinder 14 sowie zwei voneinander beabstandet angeordnete, starr über zwei im Abstand zueinander parallel angeordnete, im wesentlichen in Draufsicht dreieckförmige Wangen 13 miteinander verbundene, als Rollen 12 ausgebildete Abstützungen auf, deren Achsen parallel zur Drehachse des Rades 11 ausgerichtet sind.

Die Rollen 12 sind dabei im Bereich der beiden oberen Ecken des Dreiecks angeordnet, wohingegen das eine Ende 16 des pneumatischen oder hydraulischen Zylinders 14 in der unteren Ecke des Dreiecks angelenkt ist. Das andere Ende 17 des pneumatischen oder hydraulischen Zylinders 14 ist starr an der Unterseite 8 des Längsträgers 9 des Fahrzeugs 5 festgelegt.

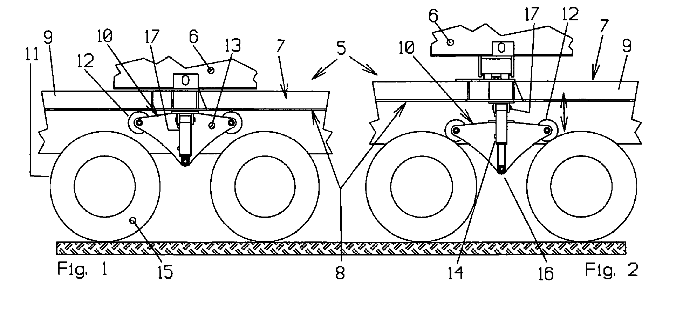

Die Stütze 10 ist mittels des pneumatischen oder hydraulischen Zylinders 14 von der Ruhelage (Figur 1) mit Abstand von den Reifen 15 der Räder 11 in die ausgefahrene Abstützlage (Figur 2) bis zur Anlage an der Lauffläche des Reifens 15 ausfahrbar, in welch letzterer sie zum Aufnehmen sowie Ableiten des Gewichtes des Containers 6 in den Untergrund dient. Wird die Stütze 10 noch weiter ausgefahren, so wird der diesbezügliche Teil der Ladefläche 7 des Fahrzeugs 5 angehoben, wie sich aus deren veschiedenem Abstand vom Untergrund in den beiden Figuren ergibt, so dass damit die Höhe der Ladefläche 7 eingestellt und bei dem Auf- und Abladen des Containers 6 von dem Fahrzeug 5 stabilisiert werden kann.

Es ist erfindungsgemäss auch möglich, die ausfahrbare Stütze 10 nicht zwischen zwei zueinander benachbarten Rädern 11, sondern mittig über nur einem Rad, das vorzugsweise ein Zwillingsrad sein kann, anzuordnen, so dass die beiden Rollen 12 an ein und derselben Lauffläche des Reifens 15 eines Rades 11 anliegen.

## Patentansprüche

1. Fahrzeug, z.B. Sattelzug, zum Aufsatteln von Befülleinrichtungen, z.B. Container, auf die Ladefläche, mit an deren Unterseite angebrachten, ausfahrbaren Stützen zum Einstellen der Höhe der Ladefläche, zum Stabilisieren der Lage der aufgesattelten Befülleinrichtung bei deren Auf- und Abladen von dem Fahrzeug und zum Aufnehmen sowie Ableitung des Gewichtes der Befülleinrichtung in den Untergrund, **dadurch gekennzeichnet, dass** die ausfahrbare Stütze im Bereich des Reifens des Fahrzeugs angeordnet ist und zwei voneinander beabstandet angeordnete, starr miteinander verbundene Abstützungen aufweist, die von einer Ruhelage mit Abstand von den Reifen in eine ausgefahrene Abstützlage bis zur Anlage an der Lauffläche des Reifens am Rad des Fahrzeugs ausfahrbar sind.

2. Fahrzeug nach Anspruch 1, **dadurch gekennzeichnet, dass** die Stützen an der Unterseite eines Längsträgers des Fahrzeugs festgelegt sind.

3. Fahrzeug nach Anspruch 1 oder 2, **dadurch gekennzeichnet, dass** die Stützen mittels eines pneumatischen oder hydraulischen Zylinders von der Ruhelage mit Abstand von den Reifen in die ausgefahrene Abstützlage bis zur Anlage an der Lauffläche des Reifens des Fahrzeugs ausfahrbar sind.

4. Fahrzeug nach einem der Ansprüche 1 bis 3, **dadurch gekennzeichnet, dass** die Abstützungen als Hohlzylinder oder Rollen ausgebildet sind, deren Achsen parallel zur Drehachse des Reifens ausgerichtet sind.

5. Fahrzeug nach einem der Ansprüche 1 bis 4, **dadurch gekennzeichnet, dass** die Stütze als Rollenbock ausgebildet ist, zwischen deren zwei im Abstand zueinander parallel angeordneten, i.w. in Draufsicht dreieckförmigen Wangen die Abstüztungen im Bereich der beiden oberen Ecken des Dreiecks angeordnet sind, wohingegen das eine Ende des pneumatischen oder hydraulischen Zylinders in der unteren Ecke des Dreiecks angelenkt ist.

6. Fahrzeug nach einem der Ansprüche 1 bis 5, **dadurch gekennzeichnet, dass** das andere Ende des pneumatischen oder hydraulischen Zylinders starr an der Unterseite des Längsträgers des Fahrzeugs festgelegt ist.
